# EUROPEAN PATENT SPECIFICATION

(11) **EP 3 520 664 B1**
(45) Date of publication and mention of the grant of the patent: **03.05.2023**
(21) Application number: 19163894.9
(22) Date of filing: 18.12.2014
(51) Int. Cl.: A47L 9/00, B08B 13/00, B60B 9/06, B60B 9/10, B60B 19/02, B60B 19/04

(54) **AUTOMATIC CLEANER**
AUTOMATISCHER REINIGER
NETTOYEUR AUTOMATIQUE

(30) Priority: 18.12.2013 KR 20130157703
(43) Date of publication of application: 07.08.2019
(62) Divisional of application: 14198814.7
(73) Proprietor: LG Electronics Inc., Seoul 150-721 (KR)
(72) Inventor: Woo, JongJin, Seoul 153-802 (KR); Kim, Jihwan, Seoul 153-802 (KR); Kim, Hwang, Seoul 153-802 (KR); Ham, Seaunglok, Seoul 153-802 (KR)
(74) Representative: Harden, Henry Simon

(56) References cited:
- EP-A2- 2 561 784
- WO-A2-03/026474
- US-A1- 2008 302 586
- US-A1- 2012 167 917

## Description

### BACKGROUND

The present disclosure relates to an automatic cleaner.

In general, automatic cleaners are devices for suctioning dusts or foreign substances on the bottom while traveling for itself.

Such an automatic cleaner includes a casing defining an exterior thereof. A moving device having a plurality of wheels to move a main body is disposed in the casing. A portion or whole of the plurality of wheels may be formed of a rubber material to increase in friction force to the bottom surface.

EP 2561784A concerns a robot cleaner comprising driving wheels assemblies, each including a driving wheel for driving a main body of the cleaner.

### SUMMARY

Embodiments provide an automatic cleaner.

In one embodiment, an automatic cleaner includes: a main body; and a wheel assembly disposed in the main body to allow the main body to move, wherein the wheel assembly includes: a driving part; a first wheel rotating by a power of the driving part, the second wheel including a plurality of contact protrusions on an outer circumferential surface thereof.

Optionally, the second wheel is elastically deformed by an external force, and the plurality of contact protrusions radially extend from the outer circumferential surface of the second wheel.

Optionally, the plurality of contact protrusions gradually decrease in thickness or diameter in a direction that is away from the outer circumferential surface of the second wheel.

Optionally, the second wheel comprises: a first body; a second body disposed outside an outer circumferential surface of the first body; and at least one connection part that connects the first body to the second body, the at least one connection part being elastically deformable, wherein the plurality of contact protrusions are disposed on an outer circumferential surface of the second body.

Optionally, the at least one connection part connects the outer circumferential surface of the first body to an inner circumferential surface of the second body and is rounded to radially extends from the outer circumferential surface of the first body.

Optionally, when external force is not applied to the second wheel, a center of the first body coincides with that of the second body, and when the external force is applied to the second wheel, the center of the second body moves and does not coincides with that of the first body.

Optionally, the wheel assembly further comprises a transmission part to transmit a rotation force of the first wheel into the second wheel.

Optionally, the transmission part comprises: a plurality of protrusions or plurality of protrusion grooves, which are disposed on/in each of the first and second wheels, and a link having a plurality of protrusions inserted into the protrusion groves of each of the wheels or a plurality of protrusion grooves in which the protrusions of each of the wheels are inserted.

Optionally, virtual lines connecting the plurality of protrusions or protrusion grooves disposed on/in each of the first wheels or the second wheels to each other have a polygonal shape.

Optionally, a rotation center of the second wheel is lower than that of the first wheel.

Optionally, the wheel assembly further comprises: a cover member to cover the second wheel; and a housing to which the cover member is coupled, wherein a hole is defined in one of the cover member and the first body, and an insertion part inserted into the hole is disposed on the other of the cover member and the first body.

Optionally, the wheel assembly further comprises: a transmission part to transmit the power of the driving part into the first wheel; and a transmission part to transmit the power of the driving part into the second wheel.

Optionally, in a state where the main body is lifted, the lowest point of the second wheel is lower than that of the first wheel.

A plurality of first wheels are disposed in the main body, and the second wheel is disposed between the plurality of first wheels.

The details of one or more embodiments are set forth in the accompanying drawings and the description below. Other features will be apparent from the description and drawings, and from the claims.

### BRIEF DESCRIPTION OF THE DRAWINGS

Fig. 1 is a bottom view of an automatic cleaner according to an embodiment.
Fig. 2 is a perspective view of a wheel assembly according to an embodiment.
Fig. 3 is an exploded perspective view of the wheel assembly according to an embodiment.
Fig. 4 is a view of the wheel assembly in a state where the automatic cleaner is lifted from a surface to be cleaned.
Fig. 5 is a view of the wheel assembly when the automatic cleaner is located on a flat surface to be cleaned.
Fig. 6 is a view of the wheel assembly when the automatic cleaner is located on a surface to be cleaned such as a carpet.

### DETAILED DESCRIPTION OF THE EMBODIMENTS

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense.

Also, in the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component(s). It should be noted that if it is described in the specification that one component is "connected," "coupled" or "joined" to another component, the former may be directly "connected," "coupled," and "joined" to the latter or "connected", "coupled", and "joined" to the latter via another component.

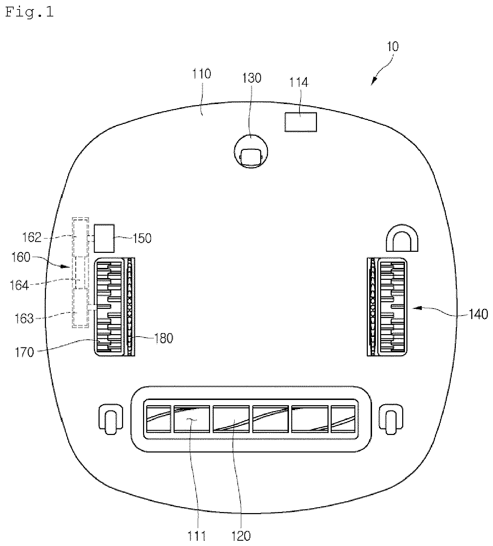

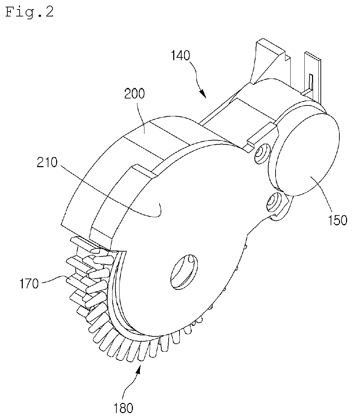

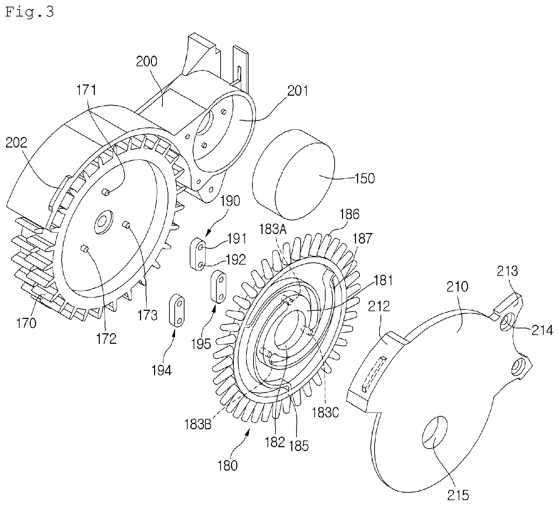

Fig. 1 is a bottom view of an automatic cleaner according to an embodiment, Fig. 2 is a perspective view of a wheel assembly according to an embodiment, and Fig. 3 is an exploded perspective view of the wheel assembly according to an embodiment.

Referring to Figs. 1 to 3, an automatic cleaner 10 according to an embodiment includes a main body 110 defining an exterior thereof. Various components may be disposed in the main body 110. For example, a suction motor (not shown) for suctioning foreign substances and a dust collection unit (not shown) for storing the suctioned foreign substances may be disposed in the main body 110.

A suction hole 111 is defined in a bottom surface of the main body 110. The suction hole 111 may function as an inlet through which foreign substances are suctioned into the main body 110, substantially, the dust collection unit by the suction motor. The suction hole 111 may be formed by cutting a portion of the bottom surface of the main body 110.

A brush 120 is disposed on a position corresponding to the suction hole 111 of the main body 110. The brush 120 may pass through the suction hole 111 to contact the foreign substances existing on the bottom, thereby removing the foreign substances. A portion of the brush 120 may be rotatably disposed on the main body 110 in a state where the portion of the brush 120 is exposed downward through the suction hole 111.

Also, the main body 110 may include a plurality of wheel assembles 140 for moving the main body 110. For example, the plurality of wheel assemblies 140 may be disposed to be spaced apart from each other in a left/right direction of the main body 10.

Each of the plurality of wheel assembles 140 may include a driving part 150, a first transmission part 160 connected to the driving part 150, a first wheel 170 connected to the first transmission part 160 to receive a power of the driving part 150, a second wheel 180 rotating together with the first wheel 170, and a second transmission part for transmitting the rotation force of the first wheel 170 into the second wheel 180.

The driving part 150 may be accommodated into a housing 200.

An opening 112 through which the first wheel 170 and the second wheel 180 pass may be defined in the main body 110. Each of the wheels 170 and 180 may pass through the opening 112 to contact a surface to be cleaned (hereinafter, referred to as a cleaning surface).

The plurality of driving parts 150 constituting the plurality of wheel assembles 140 may be independently controlled by a control part. Also, for example, each of the plurality of driving parts 150 may be a motor that is bidirectionally rotatable.

The first transmission part 160 may include a first pulley connected to the driving part 150, a second pulley 163 connected to the first wheel 170, and a belt 164 wound around each of the pulleys 162 and 163.

For another example, the power of the driving part 150 may be transmitted into the first wheel 170 by at least one gear, or the driving part 150 may be directly connected to the first wheel 170. That is, the current embodiment is not limited to a structure of the first transmission part 160, and also, the first transmission part may be omitted.

Here, the housing 200 may be supported by an elastic member (not shown). The elastic member may provide an elastic force for moving the housing 200 toward a lower side of the main body 110 into the housing 200.

Thus, when the main body 110 is disposed on the cleaning surface, the elastic member is compressed by a repulsive force of the cleaning surface. On the other hand, when a front portion of the main body 110 is lifted by an obstacle such as a door sill, the housing 200 may move downward by the elastic force of the elastic member, and thus, each of the wheels 170 and 189 may move downward.

Since the structure for vertically moving the wheel assembly 140 in the current embodiment is realized by the well-known technology, its detailed descriptions will be omitted.

A portion or whole of the first wheel 170 may be formed of a rubber material. Alternatively, the first wheel 170 may include a body and a wheel cover coupled to the outside of the body and formed of a rubber material.

The second wheel 180 may include a first body 181, a second body 185 disposed outside an outer circumferential surface of the first body 181 and spaced apart from the first body 181, and at least one connection part 187 connecting the first body 181 to the second body 185. For example, Fig. 3 illustrates a structure in which a plurality of connection parts 187 connect the first body 181 to the second body 185.

The second wheel 189 may have a thickness less than that of the first wheel 170.

The second body 185 may have a ring shape. The first body 181 may be disposed inside the second body 185.

A hole 182 connected to a cover member 210 that will be described later may be defined in the first body 181. Also, the hole 182 may improve strength of the first body 181.

The plurality of connection parts 187 connect an outer circumferential surface of the first body 181 to an inner circumferential surface of the second body 185 in a state where the plurality of connection parts 187 are spaced apart from each other. Here, the plurality of connection parts 187 connect the two bodies 181 and 185 to each other in a state where each of the plurality of connection parts 187 is rounded or bent. That is, as illustrated in Fig. 3, may radially extend from the outer circumferential surface of the first body 181, i.e., may be rounded to radially extend.

Thus, in the current embodiment, since the first and second bodies 181 and 185 are connected to each other by the plurality of connection parts 187, the second body 185 may be elastically deformed with respect to the first body 181.

That is, if an external force is not applied to the second wheel 180, a center of the first body 181 may coincide with that of the second body 185. On the other hand, if the external force is applied to the second wheel 180, the center of the first body 181 may not coincide with that of the second body 185. Here, the center of the first body 181 may be a rotation center C1 that will be described later.

A plurality of contact protrusions 186 that contact the cleaning surface may be disposed on the outer circumferential surface of the second body 185. The plurality of contact protrusions 186 may be spaced a predetermined distance from each other to radially extend from the outer circumferential surface of the second body 185.

The plurality of contact protrusions 186 may gradually decrease in thickness or diameter in a direction that is away from the outer circumferential surface of the second body 185. Alternatively, each of the plurality of contact protrusions 186 may have a thickness or diameter gradually decreasing in a direction that is away from the second body 185.

Also, an end of each of the contact protrusions 186 may be rounded to minimize damage of the cleaning surface when the end contacts the cleaning surface.

The second transmission part may include a plurality of first protrusions 171 to 173 protruding from the first wheel 170, a plurality of second protrusions 183A to 183C protruding from the first body 181 of the second wheel 180, and a plurality of links 109, 194, and 195 each of which is connected to one of the plurality of first protrusions and one of the plurality of second protrusions.

In the current embodiment, the plurality of first protrusions, the plurality of second protrusions, and the plurality of links may have the same number.

The plurality of first protrusions 171 to 173 may be disposed to be spaced apart from each other. For example, virtual lines connecting the plurality of first protrusions 171 to 173 to each other may have a triangular shape.

The plurality of second protrusions 183A to 183C may be disposed to be spaced apart from each other. For example, virtual lines connecting the plurality of second protrusions 183A to 183C to each other may have a triangular shape.

Also, a distance between the plurality of first protrusions 171 to 173 may be equal to that between the plurality of second protrusions 173A to 183C. That is, the virtual lines connecting the plurality of first protrusions 171 to 173 to each other may have an equilateral triangular shape, and the virtual lines connecting the plurality of second protrusions 183A to 183C to each other may have an equilateral triangular shape. Here, the two equilateral triangular shapes may have the same size.

Although three first protrusions and three second protrusions are provided in Fig. 3, the present disclosure is not limited to the number of first and second protrusions. However, each of the first and second protrusions may be provided in plurality so that the rotation force of the first wheel 170 is smoothly transmitted into the second wheel 180.

Also, each of the virtual lines connecting the plurality of first protrusions to each other and the virtual lines connecting the plurality of second protrusions to each other may have a polygonal shape.

The plurality of links 190, 194, and 195 may have first protrusion holes 191 in which the first protrusions 171 to 173 are inserted and second protrusion holes 192 in which the second protrusions 183A to 183C are inserted, respectively. The first protrusion hole 191 and the second protrusion hole 192 are spaced apart from each other.

Although the protrusions are disposed on each of the wheels 170 and 180, and the plurality of protrusion holes are defined in the links 190, 194, and 195 in the foregoing embodiment, the present disclosure is not limited thereto. For example, the plurality of protrusions may be disposed on the links 190, 194, and 195, and the holes in which the protrusions are inserted may be defined in each of the wheels 170 and 180.

Alternatively, the protrusion may be disposed on one of the first and second wheels 170 and 180, and the protrusion hole may be defined in the other of the first and second wheels 170 and 180. Also, the protrusion and the protrusion hole may be provided on/in each of the links 190, 194, and 195.

The housing 200 may include an accommodation part 201 for accommodating the driving part 150.

The housing 200 may include a coupling rib 202 coupled to the cover member 210 that will be described later.

The wheel assembly 140 may further include the cover member 210 for covering a portion of the outside of the second wheel 180.

The cover member 210 may be coupled to the housing 200 in a state where the cover member 210 covers the second wheel 180. The cover member 210 may include a rib accommodation part 212 having an accommodation groove for accommodating the coupling rib 202 of the housing 200.

Also, the cover member 210 may include a coupling part 213 having a coupling hole 214 coupled to the housing 200 by using a coupling member (not shown).

Thus, in the state where the coupling rib 202 of the housing 200 is accommodated into the rib accommodation part 212 of the cover member 210, when the coupling member 213 is coupled to the housing 200 by using the coupling member, the cover member 210 is fixed to the housing 200.

An insertion part 215 inserted into the hole 182 defined in the first body 180 of the second wheel 180 may be disposed on the cover member 210. An outer circumferential surface of the insertion part 215 may contact an inner circumferential surface of the hole 182.

Thus, the first body 181 of the second wheel 180 may rotate along a circumference of the insertion part 215. That is, the insertion part 215 may serve as a shaft for rotating the first body 181 and guide the rotation of the first body 181.

On the other hand, the hole may be defined in the cover member 210, and the insertion part inserted into the hole may be disposed on the first body 181.

In the state where the plurality of wheel assemblies are installed on the automatic cleaner, a distance between the plurality of second wheels 180 may be less than that between the plurality of first wheels 170. That is, the first wheels 170 may be disposed outside the second wheels 180. Thus, damage of the second wheels 180 due to the obstacle while the automatic cleaner travels may be minimized.

An auxiliary wheel 130 for easy moving of the main body 110 may be disposed on at least one of front and rear sides of the wheel assembly 140 on the main body 110 with respect to an advance direction of the main body 110. Also, a bottom detection sensor 114 may be disposed on a front side of the wheel assembly 140 on the main body 110.

The control unit may control the driving part 150 on the basis of information detected by the bottom detection sensor 114.

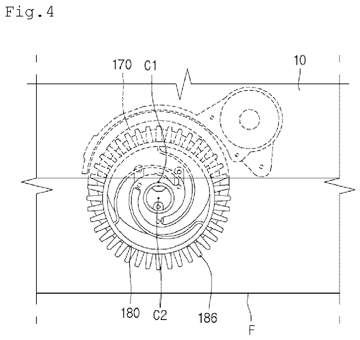

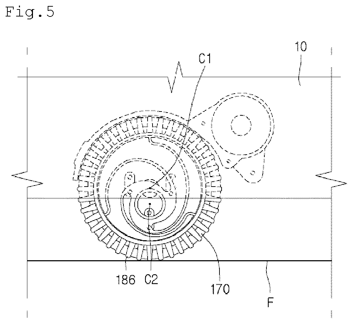

Fig. 4 is a view of the wheel assembly in a state where the automatic cleaner is lifted from a surface to be cleaned, Fig. 5 is a view of the wheel assembly when the automatic cleaner is located on a flat surface to be cleaned, and

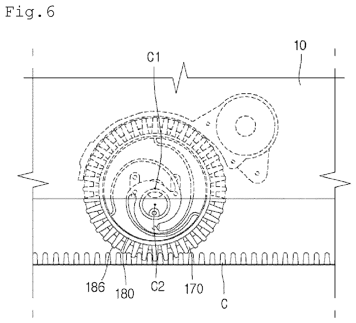

Fig. 6 is a view of the wheel assembly when the automatic cleaner is located on a surface to be cleaned such as a carpet.

Referring to Fig. 4, when the automatic cleaner is lifted from a cleaning surface F, i.e., in a state where an external force is not applied to the second wheel 180, a rotation center C2 of the second wheel 180 may be lower than that C1 of the first wheel 170.

A distance between the rotation center C1 of the first wheel 170 and the rotation center C2 of the second wheel 180 may be constantly maintained regardless of a state of the cleaning surface on which the automatic cleaner is disposed.

When the automatic cleaner is lifted from the cleaning surface, the lowest point of the second wheel 180 may be lower than that of the first wheel 170.

Referring to Fig. 5, when the automatic cleaner is disposed on a flat cleaning surface F, a repulsive force of the cleaning surface F may be transmitted into the plurality of connection parts 187 of the second wheel 180. Thus, the plurality of connection parts 187 may be elastically deformed to allow the first and second wheels 170 and 180 to contact the cleaning surface F.

Also, when the automatic cleaner is disposed on the flat cleaning surface F, the center of the first body 181 may be fixed, and the center of the second body 185 may move upward. That is, the centers of the first and second bodies 181 and 185, which coincide with each other, may not coincide with each other.

In the state of Fig. 5, when the driving part 150 operates, the first wheel 170 may rotate by the driving part 150. Thus, the rotation force of the first wheel 170 may be transmitted into the second wheel 180 to rotate together the second wheel 180.

When the automatic cleaner is disposed on the flat cleaning surface F, the first wheel 170 may contact the cleaning surface F, and thus, the automatic cleaner may smoothly move without being slid on the cleaning surface F.

Referring to Fig. 6, when the automatic cleaner is disposed on a cleaning surface such as a carpet C, a repulsive force of the carpet C may be transmitted into the plurality of connection parts 187 of the second wheel 180. Thus, the plurality of connection parts 187 may be elastically deformed to allow the first and second wheels 170 and 180 to contact the carpet C.

Also, when the automatic cleaner is disposed on the carpet C, the center of the first body 181 may be fixed, and the center of the second body 185 may move upward. That is, the centers of the first and second bodies 181 and 185, which coincide with each other, may not coincide with each other.

Here, a portion of the plurality of contact protrusions 186 disposed on the second wheel 180 may be embedded in the carpet C. Thus, the lowest point of the second wheel 180 may be lower than that of the first wheel 170.

Thus, even when the first wheel 170 contacts the carpet C, the second wheel 180 may rotate in the state where the portion of the contact protrusion 186 of the second wheel 180 is embedded in the carpet C. Thus, the automatic cleaner may smoothly move on the carpet C without being slid. That is, the plurality of contact protrusions 186 of the second wheel 180 may serve as spikes.

Thus, it may prevent a difference between a position on a map of the automatic cleaner and an actual position from occurring, and the automatic cleaner may accurately move to a charging device.

Although each of the wheel assembles includes the first and second wheels in the foregoing embodiment, one of the plurality of wheel assembles may include the first and second wheels.

Also, although the second wheel receives the rotation force of the first wheel to operate, the present disclosure is not limited thereto. For example, the second wheel may not be connected to the first wheel. That is, the second wheel may be directly connected to the driving part or indirectly connected to the driving part by an additional transmission part to receive the power of the driving part.

Alternatively, the second may not receive the rotation force of the first wheel, but rotate by a separate driving part. That is, the first driving part may drive the first wheel, and the second driving part may drive the second wheel. In this case, at least one second wheel may be disposed on the main body. In such a case, a relationship between the rotation centers of the first and second wheels may be applied and maintained as described above.

Alternatively, the second wheel may be driven by the separate driving part, and the rotation center of the first wheel may have the same height as that of the rotation center of the second wheel. However, the second wheel may have a diameter greater than that of the first wheel.

Although embodiments have been described with reference to a number of illustrative embodiments thereof, it should be understood that numerous other modifications and embodiments can be devised by those skilled in the art that will fall within the scope of the claims. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An automatic cleaner comprising:
a main body (110); and
a plurality of wheel assemblies (140) disposed in the main body (110) to allow the main body (110) to move,
wherein at least one of the plurality of wheel assemblies (140) comprises:
a driving part (150);
a first wheel (170) rotatable by a power of the driving part (150); and
a second wheel (180) rotatable by the power of the driving part (150), the second wheel (180) including a plurality of contact protrusions (186) on an outer circumferential surface thereof,
**characterized in that** a plurality of first wheels (170) are disposed in the main body (110), and the second wheel (180) is disposed between the plurality of first wheels (170) .

2. The automatic cleaner according to claim 1, wherein the second wheel (180) is elastically deformable by an external force, and
the plurality of contact protrusions (186) radially extend from the outer circumferential surface of the second wheel (180).

3. The automatic cleaner according to claim 2, wherein the plurality of contact protrusions (186) gradually decrease in thickness or diameter in a direction away from the outer circumferential surface of the second wheel (180).

4. The automatic cleaner according to claim 2, wherein the second wheel (180) comprises:
a first body (181);
a second body (185) disposed outside an outer circumferential surface of the first body (181); and
at least one connection part (187) that connects the first body (181) to the second body (185), the at least one connection part (187) being elastically deformable,
wherein the plurality of contact protrusions (186) are disposed on an outer circumferential surface of the second body (185).

5. The automatic cleaner according to claim 4, wherein the at least one connection part (187) connects the outer circumferential surface of the first body (181) to an inner circumferential surface of the second body (185) and is rounded to radially extend from the outer circumferential surface of the first body (181).

6. The automatic cleaner according to claim 4, wherein, when the external force is not applied to the second wheel, (180) a center of the first body (181) coincides with that of the second body (185), and
when the external force is applied to the second wheel (180), the center of the second body (185) moves and does not coincide with that of the first body (181).

7. The automatic cleaner according to claim 4, wherein the at least one of the wheel assemblies (140) further comprises a transmission part arranged to transmit a rotation force of the first wheel (170) into the second wheel (180).

8. The automatic cleaner according to claim 7, wherein the transmission part comprises:
a plurality of protrusions or plurality of protrusion grooves, which are disposed on/in each of the first and second wheels (170, 180), and
a link (190, 194, 195) having a plurality of protrusions inserted into the protrusion groves of each of the first and second wheels (170, 180) or a plurality of protrusion grooves in which the protrusions of each of the first and second wheels (170, 180) are inserted.

9. The automatic cleaner according to claim 8, wherein virtual lines connecting the plurality of protrusions or protrusion grooves disposed on/in each of the first wheels or the second wheels to each other have a polygonal shape.

10. The automatic cleaner according to claim 4, wherein a rotation center of the second wheel (180) is lower than that of the first wheel (170).

11. The automatic cleaner according to claim 4, wherein the wheel assembly (140) further comprises:
a cover member (210) arranged to cover the second wheel (180); and
a housing (200) to which the cover member (210) is coupled,
wherein a hole (182) is defined in one of the cover member (210) and the first body (181), and an insertion part (215) inserted into the hole (182) is disposed on the other of the cover member (210) and the first body (181).

12. The automatic cleaner according to any preceding claim, wherein the at least one of the wheel assemblies (140) further comprises:
a transmission part arranged to transmit the power of the driving part (150) to the first wheel (170); and
a transmission part arranged to transmit the power of the driving part (150) to the second wheel (180).

## Patentansprüche

1. Automatischer Reiniger umfassend:
einen Grundkörper (110); und
mehrere Radbaugruppen (140) angeordnet im Grundkörper (110), die ermöglichen, dass sich der Grundkörper (110) fortbewegt,
wobei mindestens eine der mehreren Radbaugruppen (140) umfasst:
einen Antriebsabschnitt (150);
ein erstes Rad (170) drehbar durch eine Leistung des Antriebsabschnitts (150); und
ein zweites Rad (180) drehbar durch die Leistung des Antriebsabschnitts (150), das zweite Rad (180) aufweisend mehrere Kontaktvorsprünge (186) an seiner äußeren Umfangsfläche,
**dadurch gekennzeichnet, dass** mehrere erste Räder (170) im Grundkörper (110) angeordnet sind, und das zweite Rad (180) zwischen den mehreren ersten Rädern (170) angeordnet ist.

2. Automatischer Reiniger nach Anspruch 1, wobei das zweite Rad (180) durch eine äußere Kraft elastisch verformbar ist, und
sich die mehreren Kontaktvorsprünge (186) radial von der äußeren Umfangsfläche des zweiten Rads (180) erstrecken.

3. Automatischer Reiniger nach Anspruch 2, wobei die Dicke oder der Durchmesser der mehreren Kontaktvorsprünge (186) in einer Richtung weg von der äußeren Umfangsfläche des zweiten Rads (180) allmählich abnehmen.

4. Automatischer Reiniger nach Anspruch 2, wobei das zweite Rad (180) umfasst:
einen ersten Körper (181);
einen zweiten Körper (185) angeordnet außerhalb einer äußeren Umfangsfläche des ersten Körpers (181); und
mindestens einen Verbindungsabschnitt (187), der den ersten Körper (181) mit dem zweiten Körper (185) verbindet, wobei der mindestens eine Verbindungsabschnitt (187) elastisch verformbar ist,
wobei die mehreren Kontaktvorsprünge (186) an der äußeren Umfangsfläche des zweiten Körpers (185) angeordnet sind.

5. Automatischer Reiniger nach Anspruch 4, wobei der mindestens eine Verbindungsabschnitt (187) die äußere Umfangsfläche des ersten Körpers (181) mit einer inneren Umfangsfläche des zweiten Körpers (185) verbindet und abgerundet ist, um sich radial von der äußeren Umfangsfläche des ersten Körpers (181) zu erstrecken.

6. Automatischer Reiniger nach Anspruch 4, wobei, wenn die äußere Kraft nicht auf das zweite Rad (180) ausgeübt wird, eine Mitte des ersten Körpers (181) mit jener des zweiten Körpers (185) zusammenfällt, und
wenn die äußere Kraft auf das zweite Rad (180) ausgeübt wird, sich die Mitte des zweiten Körpers (185) bewegt und nicht mit jener des ersten Körpers (181) zusammenfällt.

7. Automatischer Reiniger nach Anspruch 4, wobei die mindestens eine der Radbaugruppen (140) ferner einen Übertragungsabschnitt umfasst, der dafür ausgelegt ist, eine Drehkraft des ersten Rads (170) in das zweite Rad (180) zu übertragen.

8. Automatischer Reiniger nach Anspruch 7, wobei der Übertragungsabschnitt umfasst:
mehrere Vorsprünge oder mehrere Vorsprungsnuten, die auf/in jedem der ersten und zweiten Rädern (170, 180) angeordnet sind, und
ein Verbindungsstück (190, 194, 195) aufweisend mehrere Vorsprünge, die in die Vorsprungsnuten jedes der ersten und zweiten Räder (170, 180) eingesetzt sind, oder mehrere Vorsprungsnuten, in welche die Vorsprünge jedes der ersten und zweiten Räder (170, 180) eingesetzt sind.

9. Automatischer Reiniger nach Anspruch 8, wobei virtuelle Linien, welche die mehreren Vorsprünge oder Vorsprungsnuten, die auf/in jedem der ersten oder der zweiten Räder angeordnet sind, miteinander verbinden, eine Polygonform aufweisen.

10. Automatischer Reiniger nach Anspruch 4, wobei ein Drehmittelpunkt des zweiten Rads (180) niedriger angeordnet ist, als jener des ersten Rads (170).

11. Automatischer Reiniger nach Anspruch 4, wobei die Radbaugruppe (140) ferner umfasst:
ein Abdeckelement (210), das dafür ausgelegt ist, das zweite Rad (180) abzudecken; und
ein Gehäuse (200), mit welchem das Abdeckelement (210) gekoppelt ist,
wobei ein Loch (182) in einem des Abdeckelements (210) und des ersten Körpers (181) definiert ist, und ein in das Loch (182) eingesetzter Einsatzabschnitt (215) auf dem anderen des Abdeckelements (210) und des ersten Körpers (181) angeordnet ist.

12. Automatischer Reiniger nach einem der vorstehenden Ansprüche, wobei die mindestens eine der Radbaugruppen (140) ferner umfasst:
einen Übertragungsabschnitt, der dafür ausgelegt ist, die Leistung des Antriebsabschnitts (150) zum ersten Rad (170) zu übertragen; und
einen Übertragungsabschnitt, der dafür ausgelegt ist, die Leistung des Antriebsabschnitts (150) zum zweiten Rad (180) zu übertragen.

## Revendications

1. Nettoyeur automatique comprenant :
un corps principal (110) ; et
une pluralité d'ensembles roues (140) disposés dans le corps principal (110) pour permettre au corps principal (110) de se déplacer,
au moins l'un de la pluralité d'ensembles roues (140) comprenant :
une partie motrice (150) ;
une première roue (170) pouvant tourner par une puissance de la partie motrice (150) ; et
une seconde roue (180) pouvant tourner par la puissance de la partie motrice (150), la seconde roue (180) comprenant une pluralité de saillies de contact (186) sur une surface circonférentielle externe de celle-ci,
**caractérisé en ce qu'**une pluralité de premières roues (170) sont disposées dans le corps principal (110), et la seconde roue (180) est disposée entre la pluralité de premières roues (170).

2. Nettoyeur automatique selon la revendication 1, la seconde roue (180) étant élastiquement déformable par une force externe, et
la pluralité de saillies de contact (186) s'étendant radialement depuis la surface circonférentielle externe de la seconde roue (180).

3. Nettoyeur automatique selon la revendication 2, la pluralité de saillies de contact (186) diminuant progressivement en épaisseur ou en diamètre dans une direction à l'opposé de la surface circonférentielle externe de la seconde roue (180).

4. Nettoyeur automatique selon la revendication 2, la seconde roue (180) comprenant :
un premier corps (181) ;
un second corps (185) disposé à l'extérieur d'une surface circonférentielle externe du premier corps (181) ; et
au moins une partie de liaison (187) qui relie le premier corps (181) au second corps (185), l'au moins une partie de liaison (187) étant élastiquement déformable,
la pluralité de saillies de contact (186) étant disposées sur une surface circonférentielle externe du second corps (185).

5. Nettoyeur automatique selon la revendication 4, l'au moins une partie de liaison (187) reliant la surface circonférentielle externe du premier corps (181) à une surface circonférentielle interne du second corps (185) et étant arrondie pour s'étendre radialement à partir de la surface circonférentielle externe du premier corps (181) .

6. Nettoyeur automatique selon la revendication 4, lorsque la force externe n'est pas appliquée à la seconde roue (180), un centre du premier corps (181) coïncidant avec celui du second corps (185), et
lorsque la force externe est appliquée à la seconde roue (180), le centre du second corps (185) se déplaçant et ne coïncidant pas avec celui du premier corps (181).

7. Nettoyeur automatique selon la revendication 4, l'au moins un des ensembles roues (140) comprenant en outre une partie de transmission conçue pour transmettre une force de rotation de la première roue (170) dans la seconde roue (180).

8. Nettoyeur automatique selon la revendication 7, la partie de transmission comprenant :
une pluralité de saillies ou une pluralité de rainures de saillie, qui sont disposées sur/dans chacune des première et seconde roues (170, 180), et
un maillon (190, 194, 195) ayant une pluralité de saillies insérées dans les rainures de saillie de chacune des première et seconde roues (170, 180) ou une pluralité de rainures de saillie dans lesquelles les saillies de chacune des première et seconde roues (170, 180) sont insérées.

9. Nettoyeur automatique selon la revendication 8, des lignes virtuelles reliant la pluralité de saillies ou de rainures de saillie disposées sur/dans chacune des premières roues ou des secondes roues les unes aux autres ayant une forme polygonale.

10. Nettoyeur automatique selon la revendication 4, un centre de rotation de la seconde roue (180) étant inférieur à celui de la première roue (170).

11. Nettoyeur automatique selon la revendication 4, l'ensemble roue (140) comprenant en outre :
un élément de recouvrement (210) conçu pour recouvrir la seconde roue (180) ; et
un boîtier (200) auquel l'élément de recouvrement (210) est accouplé,
un trou (182) étant défini dans l'un de l'élément de recouvrement (210) et du premier corps (181), et une partie d'insertion (215) insérée dans le trou (182) étant disposée sur l'autre de l'élément de recouvrement (210) et du premier corps (181).

12. Nettoyeur automatique selon l'une quelconque des revendications précédentes, l'au moins un des ensembles roues (140) comprenant en outre :
une partie de transmission conçue pour transmettre la puissance de la partie motrice (150) à la première roue (170) ; et
une partie de transmission conçue pour transmettre la puissance de la partie motrice (150) à la seconde roue (180) .
